# FASCICULE DE BREVET EUROPEEN

(11) **EP 2 859 609 B1**
(45) Date de publication et mention de la délivrance du brevet: **30.03.2016**
(21) Numéro de dépôt: 13727889.1
(22) Date de dépôt: 07.06.2013
(51) Int. Cl.: H01M 8/02, H01M 8/04, G01F 1/64, G01F 1/68, G01F 1/688, G01F 1/69, G01F 15/00, G01F 15/06

(54) **CIRCUIT DE REFROIDISSEMENT POUR PILE À COMBUSTIBLE**
KÜHLKREISLAUF FÜR BRENNSTOFFZELLE
COOLING CIRCUIT FOR FUEL CELL

(30) Priorité: 08.06.2012 FR 1255363
(43) Date de publication de la demande: 15.04.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PAGANELLI, Gino, 63040 Clermont-Ferrand Cedex 9 (FR); JEANRICHARD, Lionel, 63040 Clermont-Ferrand Cedex 9 (FR)
(74) Mandataire: Roussy, Delphine
(86) Numéro de dépôt international: PCT/EP2013/061823
(87) Numéro de publication internationale: WO 2013/182687

(56) Documents cités:
- EP-A2- 1 282 183
- JP-A- 2003 346 845
- US-A1- 2008 032 168

## Description

### DOMAINE DE L'INVENTION

La présente invention concerne les piles à combustible. Plus précisément, elle concerne le système de refroidissement d'une pile à combustible.

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie est prometteuse notamment pour des applications automobiles. Une pile à combustible comporte en général un empilement d'éléments unitaires, ou cellules, qui sont constitués essentiellement d'une anode et d'une cathode séparées par une membrane polymère permettant le passage d'ions de l'anode à la cathode.

Les réactions électrochimiques se produisant dans une pile sont des réactions exothermiques, et ont donc pour conséquence de faire augmenter la température au sein de la pile. Afin de préserver les différents composants de la pile, il s'avère donc nécessaire de dissiper la chaleur issue des réactions électrochimiques.

Dans les piles à combustible existantes, cette chaleur est typiquement dissipée soit directement dans l'air ambiant au niveau de l'empilement dans le cas de piles à refroidissement par air, soit transportée par le biais d'un circuit de refroidissement dans lequel circule un fluide caloporteur, par exemple de l'eau, afin d'être dissipée dans l'air ambiant au niveau d'un radiateur, notamment prévu à cet effet.

Afin d'éviter toute détérioration de la pile, et ainsi d'augmenter sa durée de vie, il existe différents dispositifs permettant de surveiller différentes grandeurs de la pile. Cette surveillance concerne, par exemple, la tension aux bornes des différentes cellules, les pressions et taux d'humidité anodique et cathodique, et la température coeur de pile ainsi que les températures des fluides carburant et comburant. Ces dispositifs de surveillance concernent majoritaire les circuits d'alimentation en gaz comburant et carburant.

Toutefois, on a constaté qu'il pouvait être également utile de surveiller le fonctionnement du circuit de refroidissement, notamment pour détecter un risque d'échauffement excessif de la pile avant même qu'il ne se traduise par une élévation de la température.

### BREVE DESCRIPTION DE L'INVENTION

La présente invention vise donc à atteindre cet objectif en proposant un moyen de surveillance en temps réel du fonctionnement du circuit de refroidissement. En effet, différents dysfonctionnements dans le circuit de refroidissement peuvent avoir des conséquences sur la durabilité de la pile. Ainsi, si le débit du liquide dans le circuit n'est pas suffisant, le refroidissement en devient moins efficace. En cas d'interruption de débit due par exemple à une panne de la pompe de refroidissement, il y a un fort risque d'apparition de points chauds au coeur de la pile pouvant conduire à une dégradation très rapide et irréversible. Il s'avère donc utile de surveiller ce débit en temps réel, afin, éventuellement, d'arrêter la pile dans le cas où le débit deviendrait insuffisant.

Par ailleurs, on a constaté qu'une conductivité électrique trop élevée du liquide de refroidissement pouvait engendrer des courants de fuites indésirables entraînant une corrosion de certains éléments de la pile, et donc une dégradation de cette pile. En effet le liquide de refroidissement est en contact avec les cellules de la pile à combustible, et par principe de l'empilement, chacune d'entre elles se trouve à un potentiel différent des autres. La différence de potentiel entre les cellules extrêmes d'une pile à combustible de 100 cellules peut atteindre 100 volts. Pour des raisons d'efficacité du refroidissement il n'est pas possible d'isoler électriquement les cellules du liquide de refroidissement. L'empilement complet se trouvant plongé dans un même liquide de refroidissement, il est donc important de minimiser la conductivité électrique du liquide de refroidissement pour limiter les courants de fuite circulant dans le liquide de refroidissement. La conductivité électrique du liquide de refroidissement est due au fait que le liquide, lors de sa circulation dans le circuit, se charge en ions. Or, il n'est pas possible de d'éliminer totalement ce transfert d'ions, et il s'avère donc utile de surveiller en temps réel le niveau de la conductivité électrique afin, éventuellement, d'arrêter la pile dans le cas où la conductivité électrique deviendrait trop élevée. Une cartouche déionisante est normalement placée dans le circuit de refroidissement. L'information de conductivité électrique trop élevée est également un indicateur que cette cartouche doit être remplacée.

La présente invention vise donc à proposer un circuit de refroidissement pour pile à combustible muni d'un système permettant de surveiller ces paramètres. Ainsi, la présente invention concerne un circuit de refroidissement pour pile à combustible, ledit circuit comportant au moins un canal ménagé dans une plaque bipolaire de la pile à combustible, apte à laisser circuler un fluide de refroidissement, et comportant en outre un capteur de débit du fluide de refroidissement, le circuit étant caractérisé en ce qu'il comporte en outre un capteur de conductivité électrique du fluide de refroidissement installé sur le même support mécanique que le capteur de débit. Le double capteur formé sur ce support mécanique est positionné de manière à pouvoir effectuer des mesures

JP2003346845 divulgue un circuit de refroidissement pour pile à combustible, ledit circuit comportant au moins un canal ménagé dans une plaque bipolaire de la pile à combustible, apte à laisser circuler un fluide de refroidissement, et comportant en outre un capteur de débit du fluide de refroidissement, le circuit étant caractérisé en ce qu'il comporte en outre un capteur de conductivité électrique du fluide de refroidissement.

L'installation des deux capteurs sur un même support mécanique permet de répondre aux exigences de faible encombrement d'une pile à combustible, et permet également une meilleure intégration des capteurs sur une plaque terminale de la pile.

Dans une réalisation avantageuse de l'invention, les capteurs sont aptes à effectuer les mesures de débit et de conductivité électrique en temps réel. En effet, ainsi qu'indiqué précédemment, il est utile de pouvoir effectuer la surveillance du liquide de refroidissement en temps réel, afin d'éviter toute dégradation de la pile.

On connaît différentes technologies permettant de mesurer le débit d'un fluide. Ainsi, dans une réalisation avantageuse de l'invention, le capteur de débit du fluide de refroidissement comprend deux ailettes et des moyens pour mesurer une différence de température entre les deux ailettes.

Dans une autre réalisation avantageuse de l'invention, le capteur de conductivité électrique comprend deux électrodes et des moyens pour mesurer l'impédance entre ces deux électrodes.

Dans une autre réalisation avantageuse de l'invention, le circuit de refroidissement comporte des moyens pour transmettre les mesures effectuées par les capteurs à un contrôleur d'une pile à combustible sur laquelle est installé le circuit de refroidissement.

L'invention concerne également une pile à combustible munie d'un circuit de refroidissement selon l'invention.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre un support mécanique sur lequel sont installés un capteur de débit et un capteur de conductivité,
- la figure 2 montre un schéma bloc fonctionnel d'un capteur selon l'invention et d'un contrôleur de pile à combustible, et
- la figure3 montre un autre mode de réalisation d'un support mécanique tel que montré en figure 1.

### DESCRIPTION DU MEILLEUR MODE DE REALISATION DE L'INVENTION

La présente invention concerne un circuit de refroidissement pour pile à combustible. Ce circuit de refroidissement comprend un double-capteur 1, correspondant à un capteur de débit et un capteur de conductivité électrique, montés sur un même support mécanique 2. Ce support mécanique est installé sur la plaque terminale de la pile à combustible à travers laquelle passe le circuit de refroidissement.

Le capteur de débit est un capteur sensible aux variations de la conductivité thermique qui comprend un support doté notamment d'un moyen de chauffage dans des conditions contrôlées et d'un moyen de suivre la température de ce support. En régime stable, cette température est fonction à la fois de l'apport de calories de la part du moyen de chauffage et de la dissipation de chaleur du support dans son milieu ambiant. La dissipation calorifique est elle-même fonction, d'une part, de l'écart entre la température du support et celle du milieu ambiant et, d'autre part, de la conductivité thermique du liquide de refroidissement.

Ce double-capteur 1 comprend ainsi une première paire d'ailettes, contenant chacune une résistance de platine (thermistance), plongées dans le liquide de refroidissement, référencées 4, permettant d'effectuer une mesure de débit. Au niveau de la première ailette, une tension électrique est appliquée à la résistance afin de la chauffer ; le débit du fluide de refroidissement refroidit cette résistance, plus le débit est élevé et plus elle est refroidie. La seconde ailette sert à mesurer la température du fluide de refroidissement. La tension électrique appliquée est régulée afin de maintenir une différence de température constante entre la première résistance et le fluide de refroidissement. La valeur de la tension appliquée est mesurée et utilisée pour quantifier le débit.

Toutefois, on a constaté que dans certaines situations, l'application d'une tension variable pouvait conduire à un problème de corrosion galvanique, liée au potentiel. Pour éviter cela, dans un mode de réalisation préférentiel, on applique aux deux résistances une tension alternative, de moyenne nulle, à travers un pont diviseur de tension. La différence de tension entre les deux côtés du pont diviseur est mesurée et utilisée pour quantifier le débit.

Le double-capteur 1 comprend en outre une seconde paire d'ailettes de plus grande taille, référencées 3, permettant d'effectuer une mesure de conductivité électrique. Cette mesure est effectuée en mesurant à chaque instant l'impédance entre les deux ailettes constituant des électrodes. Les deux plaques 4 ayant des rôles interchangeables, elles portent ici la même référence.

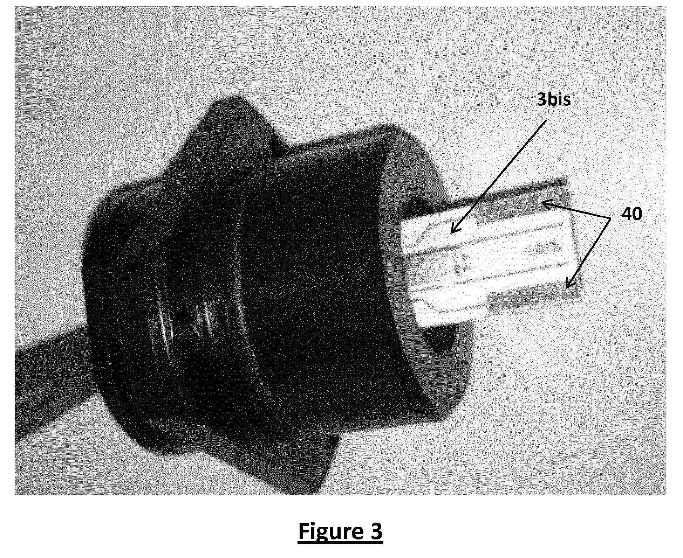

Dans un autre mode de réalisation, montré en figure 3, les deux électrodes utilisées pour la mesure de l'impédance sont intégrées dans une unique ailette 3bis. Une telle configuration ne modifie pas le principe de la mesure du débit, et permet une intégration plus facile du système.

Pour le capteur de débit autant que pour le capteur de conductivité électrique, il est possible d'interrompre la mesure afin de supprimer au maximum tout potentiel susceptible de créer de la corrosion.

Pour le capteur de débit autant que pour le capteur de conductivité électrique, une calibration est nécessaire.

De préférence, le double capteur doit être monté de façon à ce que les ailettes 3 et les ailettes 4 soient orientées pour offrir une résistance minimum au déplacement du liquide de refroidissement, c'est-à-dire que les ailettes sont positionnées de façon à se trouver alignées dans le sens de circulation du liquide de refroidissement.

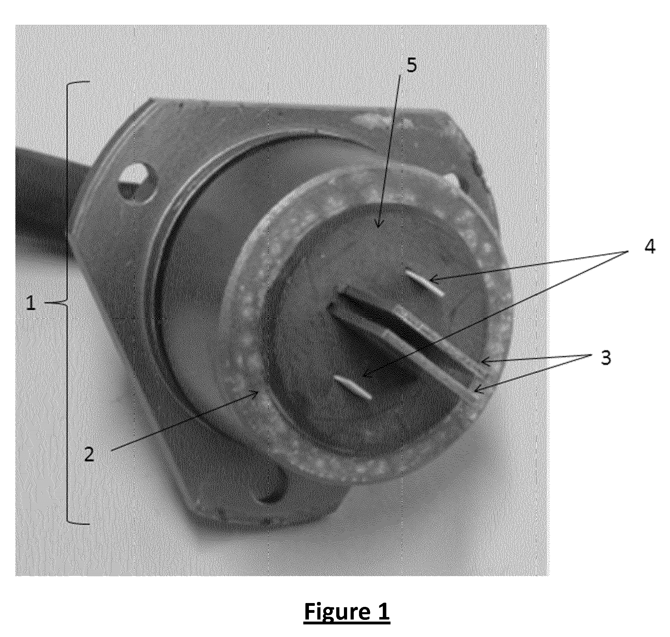

Selon un mode de réalisation, le support mécanique du double capteur est muni d'un joint de façon à éviter toute fuite de liquide de refroidissement vers l'extérieur. Il doit également y avoir une étanchéité entre les ailettes 3 et 4 et l'ensemble des composants électroniques de façon à éviter des fuites du liquide de refroidissement. Dans le cas de la figure 1, cette barrière étanche est réalisée en silicone. Les ailettes 3 et 4 sont intégrées dans cette barrière étanche en silicone 5 avec les parties sensibles des ailettes dégagées pour rester en contact avec le liquide de refroidissement.

Dans certaines configurations, il s'avère que ce joint en silicone ne permet pas de réaliser une étanchéité parfaite. Ainsi, dans un mode de réalisation préférentiel, l'étanchéité est réalisée en utilisant une barrière physique imprimée directement sur le circuit, et dans laquelle est installé un joint.

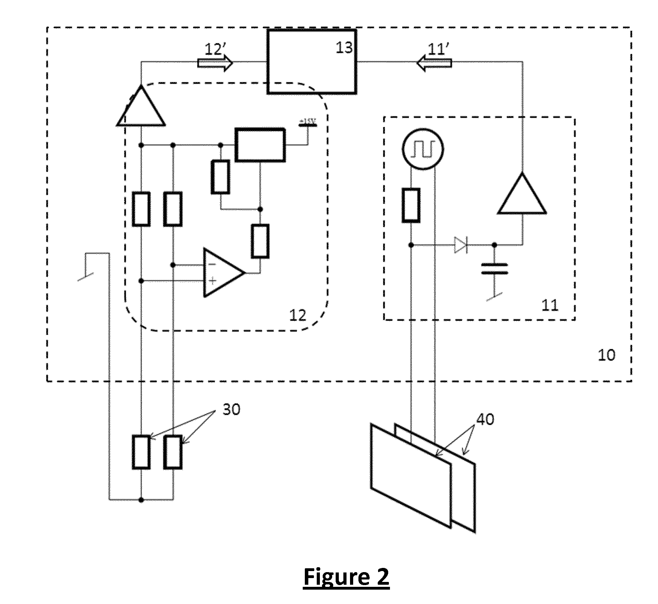

La figure 2 montre le schéma bloc du double-capteur 1 monté sur une plaque terminale 10 d'une pile à combustible. On retrouve sur cette figure deux électrodes 40, correspondant aux électrodes intégrées dans les ailettes 3 ou 3bis sur la figure 1, et deux résistances 30 correspondant aux plaques 4 sur la figure 1.

La plaque terminale 10 comprend l'ensemble des composants électroniques permettant la mise en forme des signaux issus des dispositifs de mesure 3 et 4. Ainsi, l'ensemble 11 permet la mise en forme de la mesure d'impédance effectuée entre les électrodes 40 sous forme d'un signal 11'. L'ensemble 12 permet la mise en forme de la mesure de la tension appliquée sur les résistances 30 sous forme d'un signal 12'.

Les signaux 11' et 12' ainsi conditionnés sont transmis à un microcontrôleur 13 situé dans le contrôleur de la pile. Ce microcontrôleur 13 compare alors le signal 12' correspondant à la mesure de débit à une ou plusieurs valeurs prédéterminées. Ainsi, dans un exemple, si la valeur du signal 12' devient inférieure à une première valeur prédéterminée, alors le microcontrôleur déclenche une alarme permettant d'informer un utilisateur de la baisse de débit. Si le débit n'augmente pas que la valeur du signal 12' devient inférieure à une seconde valeur prédéterminée, représentant le débit minimum pour assurer un bon refroidissement de la pile cela signifie qu'il y a un risque de dégradation pour la pile, puisque le refroidissement n'est plus effectué correctement. Dans un exemple de réalisation, le microcontrôleur commande alors l'arrêt de la pile à combustible. Dans une réalisation particulière, la première valeur prédéterminée est de l'ordre de 10 litres par minute, et la seconde valeur prédéterminée est de l'ordre de 5 litres par minute.

Le microcontrôleur 13 compare également le signal 11' correspondant à la mesure de conductivité électrique à une ou plusieurs valeurs prédéterminées. Ainsi, dans un exemple, si la valeur du signal 11' devient supérieure à une troisième valeur prédéterminée, alors le microcontrôleur déclenche une alarme permettant d'informer un utilisateur de l'augmentation de la conductivité électrique. Si cette conductivité ne diminue pas et que la valeur du signal 11' devient supérieure à une quatrième valeur prédéterminée, représentant la conductivité électrique maximale acceptable pour éviter une corrosion excessive des éléments de la pile à combustible alors le microcontrôleur commande, dans un exemple de réalisation, l'arrêt de la pile à combustible. Dans une réalisation particulière, la troisième valeur est de l'ordre de 12 micro-siemens par centimètre, et la quatrième valeur est de l'ordre de 16 micro-siemens par centimètre.

Ainsi, la présente invention permet de proposer un dispositif de surveillance du circuit de refroidissement d'une pile à combustible, permettant de détecter toute anomalie de fonctionnement dans le circuit de refroidissement, et ainsi d'arrêter la pile à combustible avant toute détérioration.

## Revendications

1. Circuit de refroidissement pour pile à combustible, ledit circuit comportant au moins un canal ménagé dans une plaque bipolaire de la pile à combustible, apte à laisser circuler un fluide de refroidissement, et comportant en outre un capteur (1) de débit du fluide de refroidissement, le circuit étant **caractérisé en ce qu'**il comporte en outre un capteur de conductivité électrique du fluide de refroidissement installé sur le même support mécanique (2) que le capteur de débit, formant un double capteur.

2. Circuit de refroidissement selon la revendication 1 dans lequel les capteurs sont aptes à effectuer les mesures de débit et de conductivité électrique en temps réel.

3. Circuit de refroidissement selon la revendication 1 ou 2, dans lequel le capteur de débit du fluide de refroidissement comprend deux ailettes (4) et des moyens pour mesurer une différence de température entre ces deux ailettes.

4. Circuit de refroidissement selon l'une des revendications précédentes, dans lequel le capteur de conductivité électrique comprend deux électrodes (40) et des moyens pour mesurer l'impédance entre ces deux électrodes.

5. Circuit de refroidissement selon l'une des revendications précédentes, comportant des moyens pour transmettre les mesures effectuées par les capteurs à un contrôleur d'une pile à combustible sur laquelle est installé le circuit de refroidissement.

6. Circuit de refroidissement selon l'une des revendications précédentes, dans lequel le support mécanique du double capteur est muni d'un joint de façon à éviter toute fuite de liquide de refroidissement vers l'extérieur.

7. Circuit de refroidissement selon les revendications 3 et 4, comprenant un joint d'étanchéité apposé entre les ailettes (4), les électrodes (40) et l'ensemble des composants électroniques des capteurs.

8. Circuit de refroidissement selon la revendication 7, dans lequel le joint d'étanchéité est réalisé en silicone.

9. Pile à combustible comprenant un circuit de refroidissement selon l'une des revendications 1 à 8.

## Patentansprüche

1. Kühlkreislauf für eine Brennstoffzelle, wobei der Kreislauf mindestens einen in einer Bipolarplatte der Brennstoffzelle ausgesparten Kanal aufweist, der ein Kühlfluid zirkulieren lassen kann, und außerdem einen Durchflusssensor (1) des Kühlfluids aufweist, wobei der Kreislauf **dadurch gekennzeichnet ist, dass** er außerdem einen elektrischen Leitfähigkeitssensor des Kühlfluids aufweist, der in dem gleichen mechanischen Träger (2) eingebaut ist wie der Durchflusssensor, wodurch ein doppelter Sensor gebildet wird.

2. Kühlkreislauf nach Anspruch 1 wobei die Sensoren fähig sind, die Durchfluss- und elektrischen Leitfähigkeitsmessungen in Echtzeit auszuführen.

3. Kühlkreislauf nach Anspruch 1 oder 2, wobei der Durchflusssensor des Kühlfluids zwei Rippen (4) und Einrichtungen enthält, um eine Temperaturdifferenz zwischen diesen zwei Rippen zu messen.

4. Kühlkreislauf nach einem der vorhergehenden Ansprüche, wobei der elektrische Leitfähigkeitssensor zwei Elektroden (40) und Einrichtungen enthält, um die Impedanz zwischen diesen zwei Elektroden zu messen.

5. Kühlkreislauf nach einem der vorhergehenden Ansprüche, der Einrichtungen aufweist, um die von den Sensoren durchgeführten Messungen an ein Steuergerät einer Brennstoffzelle zu übertragen, in die der Kühlkreislauf eingebaut ist.

6. Kühlkreislauf nach einem der vorhergehenden Ansprüche, wobei der mechanische Träger des doppelten Sensors mit einer Dichtung versehen ist, um jedes Kühlfluidleck nach außen zu verhindern.

7. Kühlkreislauf nach den Ansprüchen 3 und 4, der eine Dichtung enthält, welche zwischen den Rippen (4), den Elektroden (40) und der Gesamtheit der elektronischen Bestandteile der Sensoren angebracht ist.

8. Kühlkreislauf nach Anspruch 7, wobei die Dichtung aus Silikon hergestellt ist.

9. Brennstoffzelle, die einen Kühlkreislauf nach einem der Ansprüche 1 bis 8 enthält.

## Claims

1. Cooling circuit for a fuel cell, said circuit including at least one channel formed in a bipolar plate of the fuel cell, adapted to permit the flow of a cooling fluid, and further including a sensor (1) of the flow rate of the cooling fluid, the circuit being **characterized in that** it further includes a sensor of the electrical conductivity of the cooling fluid, installed on the same mechanical support (2) as the flow rate sensor, forming a double sensor.

2. Cooling circuit according to Claim 1, wherein the sensors are adapted to make measurements of flow rate and electrical conductivity in real time.

3. Cooling circuit according to Claim 1 or 2, wherein the sensor of the flow rate of the cooling fluid comprises two fins (4) and means for measuring a temperature difference between these two fins.

4. Cooling circuit according to any of the preceding claims, wherein the electrical conductivity sensor comprises two electrodes (40) and means for measuring the impedance between these two electrodes.

5. Cooling circuit according to any of the preceding claims, including means for transmitting the measurements made by the sensors to a controller of a fuel cell in which the cooling circuit is installed.

6. Cooling circuit according to any of the preceding claims, wherein the mechanical support of the double sensor is provided with a gasket so as to prevent any leakage of cooling liquid to the outside.

7. Cooling circuit according to Claims 3 and 4, comprising a sealing gasket placed between the fins (4), the electrodes (40) and the set of electronic components of the sensors.

8. Cooling circuit according to Claim 7, wherein the sealing gasket is made of silicone.

9. Fuel cell comprising a cooling circuit according to any of Claims 1 to 8.
